# EUROPEAN PATENT APPLICATION

(11) **EP 3 188 329 A1**
(43) Date of publication of application: **05.07.2017**
(21) Application number: 15203151.4
(22) Date of filing: 30.12.2015
(51) Int. Cl.: H02B 1/28, H01H 9/04, H01H 9/16

(54) **SWITCHING DEVICE**

(71) Applicant: Bomar S.A. w upadlosci ukladowej, 41-400 Myslowice (PL)
(72) Inventor: LESNIAK, Tomasz, 45-265 Opole (PL); MALOLEPSZY, Stanislaw, 43-600 Jaworzno (PL); NIEMCZYK, piotr, 43-230 Goczalkowice Zdroj (PL); WEGRZYNEK, Bogdan, 33-300 Nowy Sacz (PL)
(74) Representative: Korga, Leokadia

(57) **Abstract**

The object of the invention is a switching device for use in underground mines.

The switching device containing explosion-proof casing, characterized in that the engines safety system is equipped only in breaker / contactor controlled manually by mechanical knobs from outside the casing.

## Description

The object of the invention is a switching device for use in underground mines.

From patent PL 158038 is known explosion proof electrical connector characterized in that a single-chamber body, whose walls are mounted on the threaded flameproof, pedestals cable entries having on its front surface projections, which fall between the bent tabs on the base, embedded in the bottom the hull and on which are mounted push button switches, a terminal block and the flame-proof lens, wherein the hull is derived from both of its sides, a control shaft to which are attached the ends of the bumper, which in turn are attached to the drive lever.

From patent PL 391887 is known explosion proof-cam characterized in that the cam implementing disposed within a housing with a sealable cover and fixed to the bottom by means of grooves and between adjoining edges of the housing and cover the entire circumference thereof is disposed gasket material elastic-elastic. The cover is provided outside a scroll wheel mounted on a threaded element to the coupling element, passing through the opening in the lid, and a coupling element connected to the drive shaft of the cam implementing wherein the hole from the inside of the cover (2) abuts arranged concentrically annular seal.

From the description of PL 120881 is known switchgear housing which is composed of a frame which has side walls, a top wall and a bottom wall. The interior of the cabinet is divided by horizontal plates and vertical partition walls into a number of chambers which is mounted electrical equipment. The bottom wall is a grid plate and is constructed of longitudinal strips and transverse strips, which have cross-sectional shape of the channel section. The horizontal plate has one or more pairs of openings. The side walls and the inner surface of the vertical divisions on both flat surfaces of the fastening strips are sockets. Vertical baffles are mounted in the grooves in the battens or studs holes of the horizontal plate of the patent.

An important issue in the mining industry is to construct a switching device protected against explosion risk.

A switching device containing proof housing characterized in that the safety system is equipped engines only in breaker / contactor controlled manually by mechanical knob from outside the enclosure.

Favorably when the protection circuit is equipped with two LEDs showing the operating state.

The device has been stripped off system components and control processor and is based solely on mechanical solutions, which use - affects the operating safety and durability of the switching device.

## Claims

1. The switching device containing explosion-proof casing, **characterized in that** the engines safety system is equipped only in breaker / contactor controlled manually by mechanical knobs from outside the casing.

2. The switching device according to claim 1, **characterized in that** the safety system is equipped with two diodes showing the operating state of the device.
